# EUROPEAN PATENT APPLICATION

(11) **EP 2 849 408 A1**
(43) Date of publication of application: **18.03.2015**
(21) Application number: 13306257.0
(22) Date of filing: 16.09.2013
(51) Int. Cl.: H04L 29/08, G06F 17/30, H04W 4/02

(54) **Method for defining a geographic validity area for received data, a cache proxy, and a terminal for implementing this method**

(71) Applicant: ALCATEL LUCENT, 92100 Boulogne-Billancourt (FR)
(72) Inventor: Trefcon, Michel, 35000 Rennes (FR); Phan, CaoThanh, 35000 Rennes (FR); Songis, Bertrand, 35000 Rennes (FR)
(74) Representative: Sciaux, Edmond

(57) **Abstract**

A method for defining a geographic validity space for data supplied to a client, comprises the steps of:
- sending (1) an Hypertext Transfer Protocol request message from a client (A) to a server (SVR), this request message containing a data request and the current geolocation of this client,
- retrieving (4), in the server, the requested data corresponding to the geolocation,
- sending (8) an Hypertext Transfer Protocol response message from the server (SVR) to the client (A), this response message containing the retrieved requested data corresponding to the geolocation,
- extracting (10) the received data from the received response message,
- storing (11) the data received in the Transfer Protocol response message, in a cache memory associated to the client;
- assigning (5) a validity space to the retrieved requested data,
- determining (6) second geolocation information defining this validity space,
- inserting (7) this second geolocation information into the Hypertext Transfer Protocol response message,
- extracting (10), from the received Hypertext Transfer Protocol response message, the second geolocation information defining a validity space for the data in the Hypertext Transfer Protocol response message,
- associating (12), to the stored received data, the second information defining a validity space,
- and periodically checking (13) the validity of the stored received data by determining whether the current geolocation of the client is still inside the validity space.

## Description

### BACKGROUND OF THE INVENTION

### Field of the invention

The present invention concerns the web applications, in particular the applications run on mobile terminals. A mobile terminal often comprises means for determining its geolocation. These means enable geolocation based applications. For instance, ads in a web page can be refreshed as a function of the geolocation of the terminal displaying the web page. Another use case is maps and navigation. A server serves map data based on the current geo of the terminal.

### Description of the prior art

Existing geolocation based services are provided by proprietary solutions available on top of the Hypertext Transfer Protocol (HTTP).

HTTP is an application protocol for distributed, collaborative, hypermedia information systems. It is the foundation of data communication for the World Wide Web. For instance, the services respectively called Latitude and Googlemaps, provided by Goggle company are on top of the HTTP.

The W3C organisation works on a geolocation application programming interface (draft edition). This interface is a JavaScript application programming interface, i. e. is also on top of the HTTP protocol.

The solutions that are on top of the HTTP protocol have the drawback of not being natively integrated into the clients, in particular the web browsers: They imply developing some specific software, and installing it in the terminals.

The aim of the invention is to propose a solution that avoids this drawback.

### SUMMARY OF THE INVENTION

A first object of the invention is a method for defining a geographic validity space for data supplied to a client, comprising the steps of:
- sending an Hypertext Transfer Protocol request message from a client to a server, this request message containing a data request and the current geolocation of this client,
- receiving this request message in the server,
- extracting the data request and the geolocation of the client,
- retrieving, in the server, the requested data corresponding to the geolocation,
- sending an Hypertext Transfer Protocol response message from the server to the client, this response message containing the retrieved requested data corresponding to the geolocation,
- receiving the response message in the client,
- extracting the received data from the received response message,
- storing the data received in the Transfer Protocol response message, in a cache memory associated to the client;
that is **characterized in that** it further comprises the steps of:
- assigning a validity space to the retrieved requested data,
- determining second geolocation information defining this validity space,
- inserting this second geolocation information into the Hypertext Transfer Protocol response message,
- extracting, from the received Hypertext Transfer Protocol response message, the second geolocation information defining a validity space for the data in the Hypertext Transfer Protocol response message,
- associating, to the stored received data, the second information defining a validity space,
- and periodically checking the validity of the stored received data by determining whether the current geolocation of the client is still inside the validity space.

The method according to the invention provides geolocation at the HTTP protocol level which is a standard and a key protocol of the web. So it does not need developing some specific software, and installing it in the terminals. It means that any resource compliant with the HTTP protocol will be able to be refreshed dynamically, based on the geolocation of the terminal, without any programming layer (e.g. Javascript) because it is done at the client level. If allowed by client and server, HTTP proxies may also cache responses.

This method is applied by the application server, the cache proxy, and the terminal according to the invention.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 is a flow chart illustrating an embodiment of the method according to the invention, in a simple case where a client directly access to a server without any intermediate cache proxy; and where there is no validity time period.
- Figure 2 is a block diagram showing an exemplary mobile network and terminals involved in providing geolocation based services according to the invention, for illustrating a case where a client accesses to a server via intermediate cache proxies.
- Figure 3 is a flow chart illustrating an embodiment of the cache proxy according to the invention, in a simple case where a client access to a server via an intermediate cache proxy; and where there is no validity time period.

### DETAILED DESCRIPTION OF THE PREFERRED EMBODIMENTS

The protocol HTTP functions as a request-response protocol, in the client-server computing model. The server provides resources such as files and other content, or performs other functions on behalf of the client. It returns a HTTP response message to the client. The response message contains completion status information about the request and may also contain requested data in its message body.

A web browser, for instance, is a HTTP client. Other types of HTTP client include the indexing software used by search providers (web crawlers), voice browsers, mobile applications and other software that accesses, consumes or displays web content. For example, let us consider a web browser running in a mobile host, for instance a mobile phone, a smartphone, etc. The server may be an application running on a computer hosting a web site. This client submits an HTTP request message to the server for receiving data.

The method according to the invention comprises the steps of introducing geolocation information in HTTP messages, so that the geolocation of a terminal can be taken into account at:
- request level,
- response level,
- and caching level.

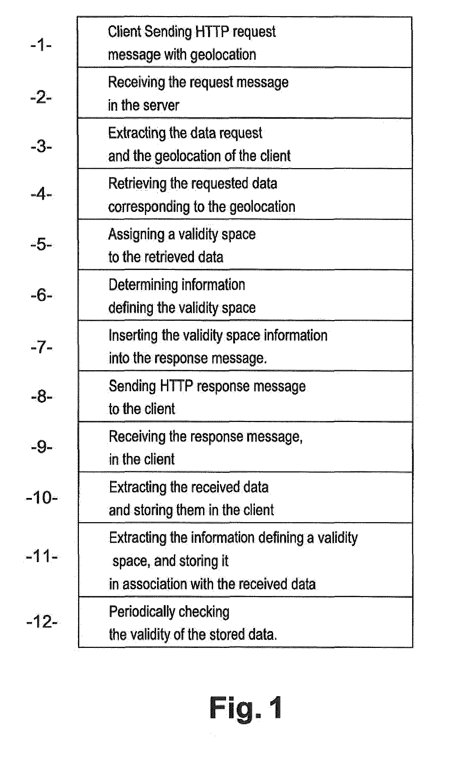

**Figure 1** is a flow chart illustrating an embodiment of the method according to the invention, in a simple case where a client directly accesses to a server without any intermediate cache proxy; and where there is no validity time period.

**Step 1:** A client, running on a mobile terminal, directly sends a HTTP request message to the server. This message comprises first geolocation information that is the current geolocation of the client. The first geolocation information may comprise the longitude, the latitude, the elevation and the accuracy of the current position of the client. It may further comprise the heading and the speed of the client, if available. This first geolocation information is preferably conveyed in headers of the HTTP request message. Preferably these headers will be defined in a standard modifying the present HTTP.

**Step 2:** The server receives the HTTP request message.

**Step 3:** It extracts the data request and the first geolocation information from the received request message.

**Step 4:** It retrieves, in a memory of this server, data corresponding to the data request and to the first geolocation information.

**Step 5:** It assigns a validity space to the retrieved data. This validity space is an area or a volume where the data are valid. This validity space has at least two dimensions. It may also add validity conditions regarding heading and speed, in the response message. The space of validity has then more many dimensions.

**Step 6:** It determines second geolocation information defining this validity space. The validity space can be defined in different ways. It may be:
- a simple formula describing the shape of an area;
- a combination of formulas;
- encoded geographical data, e.g. encoded with the Keyhole Markup Language (KML) that is an XML notation for expressing geographic annotation and visualization within Internet-based, two-dimensional maps and three-dimensional Earth browsers;
- or a uniform resource identifier (URI) pointing to a web resource containing data describing the validity space.

**Step 7:** It inserts the retrieved data and the second geolocation information into a HTTP response message. The second geolocation information is preferably conveyed in headers of the HTTP response message. Preferably these headers will be defined in a standard modifying the present HTTP.

**Step 8:** It sends this HTTP response message to the client that has requested these data.

**Step 9:** The client receives the HTTP response message.

**Step 10:** It extracts the data from the received response message and stores them in a cache memory, the terminal.

**Step 11:** It extracts the second geolocation information from the received HTTP response message, and stores it in the cache memory, in the terminal, in association with the stored data from the received response message.

**Step 12:** It periodically checks the validity of the stored data by comparing the current geolocation of the terminal with the validity space defined by the second geolocation information associated to the stored data. As far as the geolocation of the client is inside the validity space, the stored data are valid and the client may use them.

When the client detects that its geolocation is outside the validity space, it does not consider the data as valid any more:
- It may send, to the server, a new request HTTP message comprising an updated geolocation. Then the server sends a new response accordingly.
- It may also send a conditional request in order to know if a previously received response is still valid in spite of the fact that the client moved outside the validity space:
   -- If the data are still valid, the server responds with a standardized 304 response message meaning that there is no new data available, i. e. the previously received data are still valid.
   -- If the data are no more valid, the server sends a 200 standardized response message containing new data associated to new second geolocation information defining a new validity space.

A validity time interval is already foreseen in the HTTP protocol: A client receives data with some validity time information that can be duration, or date (including hours, minutes, and seconds). According to the invention, a client may manage the content of its cache as function of a validity space and of a time validity interval, in combination.

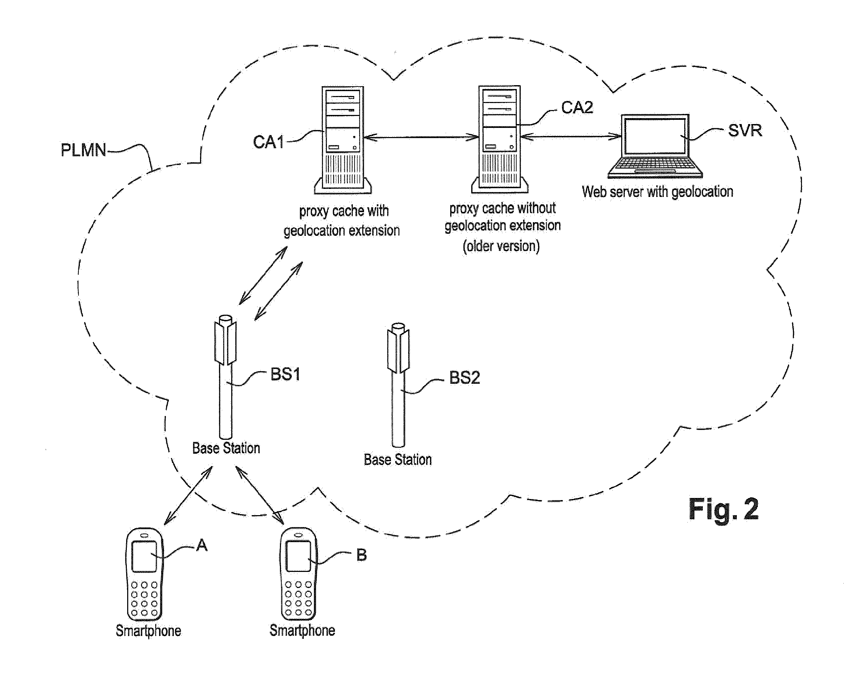

**Figure 2** is a block diagram showing an exemplary mobile network and terminals involved in providing geolocation based services according to the invention, for illustrating a case where a client accesses to a server via intermediate cache proxies; and where there is a validity space and a validity time period for the received data. It shows an exemplary public land mobile network PLMN and exemplary mobile terminals A and B according to the invention. The terminals A and B are smartphones each comprising: means for determining its geolocation, for instance a receiver adapted for the Global Position System (GPS); and a HTTP client according to the invention, that is a web browser. We suppose the end users of these terminals haves allowed the use of the geolocation.

The network PLMN comprises:
- Classical base stations BS1 and BS2, the terminals A and B being currently connected to the network PLMN via the base station BS1.
- A proxy cache CA1 according to the invention and that is close to the base stations BS1 and BS2 so that the terminals A and B directly access to this proxy cache CA1 without any other intermediate proxy.
- A web server SVR according to the invention, for an application using geolocation, for instance location based advertizing.
- A classical proxy cache CA2, i. e. without a geolocation extension according to the invention, which is between the proxy cache CA1 and the web server SVR.

The protocol HTTP is designed to permit intermediate network elements to improve or enable communication between clients and servers. High-traffic websites often benefit from web cache servers, such as the proxy caches CA1 and CA2. The proxy caches deliver content on behalf of upstream servers, such as the server SVR, to improve response time.

In the terminals, such as A and B, web browsers cache store previously received web resources, and reuse them, when possible, to reduce necessary network traffic.

In other examples, HTTP proxy servers placed at private network boundaries can facilitate communication for clients without globally routable addresses, by relaying messages from and to external servers.

In the example illustrated by Figure 2, the application using geolocation consists in sending an advertisement picture to a terminal, and refreshing the picture when the terminal moves (e.g. an end user is walking in a street). It could also consist in sending a full web page that contains advertising contents or any content related to the geolocation of the terminal.

Another application is the updating of maps and navigation. A server may serve map data based on geolocation of the terminal, and, possibly based also on speed and heading, if available.

Let us consider a case where the proxies cache CA1 and the proxy cache CA2 intervene; and where the received data are associated to a validity space and a validity time period in combination.

If allowed by a server, caching proxies, such as the proxy cache CA1, store in a cache memory the data contained in the HTTP response messages sent by the servers, in order to serve them to other clients with same conditions, i. e. same type of client, same request to a same server, with a geolocation within a same validity space.

A time validity period is already defined in the HTTP protocol, for a client or a cache proxy. In this example, the web browser of the terminal A, the proxy caches CA1 and CA2 implement this function. They periodically check whether the data, they have respectively received and stored in cache memories, are still up to date. Each of them knows when a given time validity period expires. When the time validity period has expired, there are two possibilities:
- If the data stored in the cache do not need updating, then the server sends a 304 response without payload. Then the client or the cache proxy continues to use the previously received data.
- If the data previously received by the client or the cache proxy need updating, then the server sends a response message containing new fresh data as payload. Then the client or the cache proxy replaces the old stored data by the new ones.

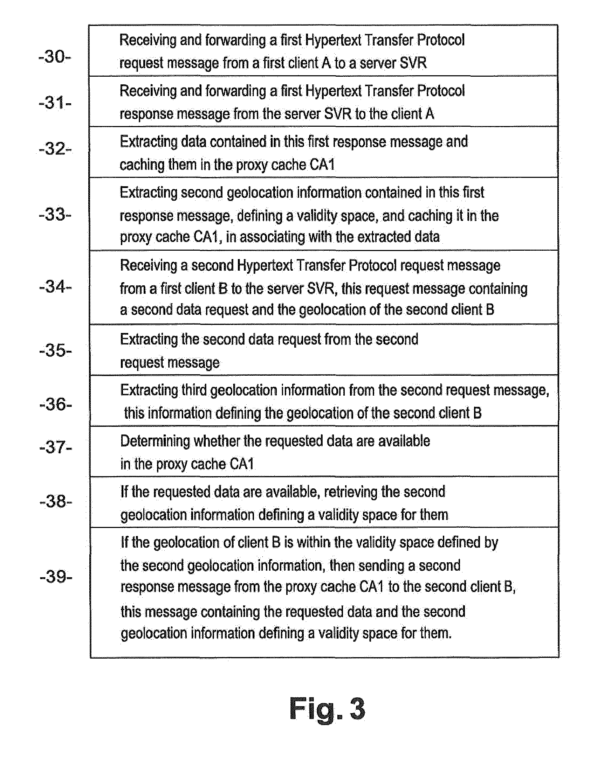

**Figure 3** is a flow chart illustrating an embodiment of the cache proxy according to the invention, in a simple case where a client access to a server via an intermediate cache proxy; and where there is no validity time period.

**Step 30:** The proxy cache CA1 receives, from the client of terminal A, a first HTTP request message containing a first data request and first geolocation information defining the geolocation of the terminal A. it forwards the first HTTP request message from the terminal A to the server SVR.

**Step 31:** It receives a first HTTP response message containing the data requested by the first data request, and it forwards it to the terminal A.

**Step 32:** It extracts data contained in this first HTTP response message and caches them in a cache memory of the proxy cache CA1.

**Step 33:** It extracts second geolocation information contained in this first response message, this first geolocation information defining a validity space, and caches it in the cache memory of the proxy cache CA1, in association with the data extracted from the first response message.

**Step 34:** It receives a second HTTP request message from the terminal B to the server SVR, this request message containing a second data request and the geolocation of the terminal B.

**Step 35:** It extracts this second data request from the second request message.

**Step 36:** It extracts third geolocation information from the second request message, this information defining the geolocation of the terminal B.

**Step 37:** It determines whether the data requested by the second data request are available in the proxy cache CA1.

**Step 38:** If the requested data are available, it retrieves the second geolocation information defining a validity space for them, from the cache memory of the proxy cache CA1.

**Step 39:** If the requested data are available and if the geolocation of the terminal B is within the validity space defined by the second geolocation information, then it sends a second HTTP response message to the terminal B, this message containing the requested data and the second geolocation information defining a validity space for them.

Now let us consider an embodiment of the proxy cache according to the invention, in a case where a client access to a server via an intermediate cache proxy; and where there is a validity time period. The cache proxy make steps similar to the steps 31-38 described above. Then there are two main possibilities:
- If this geolocation of the terminal B is inside the validity space associated to the data stored in its cache proxy memory, then the cache proxy CA1 checks whether the current time is within the validity time interval associated to the data stored in its cache memory. If these two conditions are satisfied, the cache proxy CA1 sends, to the terminal B a HTTP response message containing the data stored in its cache memory.
- If the geolocation is not inside the validity space associated to the data stored in the cache memory of the cache proxy CA1, or if the current time is not within the validity time interval associated to the data stored in the cache memory, the cache proxy CA1 forwards the request message to the server SVR, via the classical cache proxy CA2. The proxy cache CA2 receives the HTTP request message containing a data request and the geolocation information defining the geolocation of the terminal B. then there two possibilities:
   -- If the proxy cache CA2 detects that the data requested by the terminal B are stored in its cache memory, because they have transited by the proxy cache CA2 when the server SVR has previously responded to a similar request, and they have been cached by the proxy cache CA2. The proxy cache CA2 does not consider the geolocation of the terminal B, since it does not comprise a geolocation extension. It only checks whether the current time is within the validity time interval corresponding to the requested data.
   -- If the proxy cache CA2 detects that the data requested by the terminal B are not stored in its cache memory, it forwards the request message to the server SVR. Then the server SVR sends, to the terminal B, a HTTP response message via the cache proxy CA2 and the cache proxy CA1.This new response message contains new data, new second geolocation information defining a new validity space, and possibly a new time limit.

Now let us consider the case of a classical terminal, i. e. that does not comprise the geolocation extension according to the invention: If the proxy cache CA1 receives a HTTP request message from any client that does not support the geolocation extension, it only checks the time validity of the data stored in its cache. So the proxy cache CA1 manages two types of cached data:
- Data associated with a validity space and a validity time period.
- Data associated with a validity time period only.

The proxy caches supporting the geolocation extension must be directly connected to the clients, so that this geolocation extension can benefit to the clients supporting this geolocation extension.

## Claims

1. A method for defining a geographic validity space for data supplied to a client, comprising the steps of:
- sending (1) an Hypertext Transfer Protocol request message from a client (A) to a server (SVR), this request message containing a data request and the current geolocation of this client,
- receiving (2) this request message in the server (SVR),
- extracting (3) the data request and the geolocation of the client,
- retrieving (4), in the server, the requested data corresponding to the geolocation,
- sending (8) an Hypertext Transfer Protocol response message from the server (SVR) to the client (A), this response message containing the retrieved requested data corresponding to the geolocation,
- receiving (9) the response message in the client,
- extracting (10) the received data from the received response message,
- storing (11) the data received in the Transfer Protocol response message, in a cache memory associated to the client;
**characterized in that** it further comprises the steps of:
- assigning (5) a validity space to the retrieved requested data,
- determining (6) second geolocation information defining this validity space,
- inserting (7) this second geolocation information into the Hypertext Transfer Protocol response message,
- extracting (10), from the received Hypertext Transfer Protocol response message, the second geolocation information defining a validity space for the data in the Hypertext Transfer Protocol response message,
- associating (12), to the stored received data, the second information defining a validity space,
- and periodically checking (13) the validity of the stored received data by determining whether the current geolocation of the client is still inside the validity space.

2. A server (SVR) for defining a geographic validity space for data supplied to a client, comprising means for:
- receiving (2) a Hypertext Transfer Protocol request message from a client (A), this request message containing a data request and the current geolocation of this client,
- extracting (3) the data request and the geolocation of the client,
- retrieving (4), in a memory, the requested data corresponding to the geolocation;
- sending (8) an Hypertext Transfer Protocol response message to the client (A), this response message containing the requested data corresponding to the geolocation;
**characterized in that** it further comprises means for:
- assigning (5) a validity space to the retrieved requested data,
- determining (6) second geolocation information defining this validity space,
- inserting (7) this second geolocation information into the Hypertext Transfer Protocol response message.

3. A proxy cache (CA1) for defining a geographic validity space for data supplied to a client, comprising means for:
- receiving and forwarding (30) a first Hypertext Transfer Protocol request message from a first client (A), this message being addressed to a server (SVR), and containing a first data request and first location information defining the geolocation of the first client (A),
- receiving and forwarding (31) a first Hypertext Transfer Protocol response message from the server (SVR) to the first client (A) and containing data requested by this first client,
- extracting (32) the data contained in the first response message, and storing them in a cache memory of the proxy cache (CA1),
- then receiving (34) a second Hypertext Transfer Protocol request message from a second client (B) to the server (SVR), this request message containing a second data request and the geolocation of the second client (B),
- extracting (35) the second data request from the second request message,
- extracting (36), from the second request message, third geolocation information defining the geolocation of the second client (B),
- determining (37) whether the data requested by the second data request are available in the cache memory of the proxy cache (CA1),
- if the requested data are available, retrieving them and sending (39) a second Hypertext Transfer Protocol response message to the second client (B), this response message containing the requested data;
**characterized in that** it further comprises means for:
- extracting (33) second geolocation information contained in the first response message and defining a validity space for data contained in the first response message, and caching it in the cache memory of the proxy cache (CA1) in association with the data extracted from the first response message,
- determining (39) whether the geolocation of the second client (B) is within the validity space defined by the second geolocation information, then allowing the sending of the second response message if the geolocation of the second client (B) is within the validity space defined by the second geolocation information, this second response message containing the requested data and the second geolocation information defining a validity space for them.

4. A terminal (A) for defining a geographic validity area for data supplied to a client running on this terminal, comprising means for:
- sending (1) an Hypertext Transfer Protocol request message to a server (SVR), this first request message containing a data request and first geolocation information defining the current geolocation of the terminal,
- receiving (2) an Hypertext Transfer Protocol response message from the server (SVR), this request message containing the requested data,
- extracting (10) the data from the received response message and storing (11) them in the terminal;
**characterized in that** it further comprises means for:
- extracting (11) second geolocation information from the received response message and storing it in the client, in association with the stored received data;
- and periodically checking (12) the validity of the stored data, by determining whether the current geolocation of the terminal is still inside the validity space defined by the second geolocation information associated to these data.
